(19) Europäisches Patentamt
European Patent Office
Office européen des brevets

(11) Veröffentlichungsnummer: **0 122 535 B1**

(12) # EUROPÄISCHE PATENTSCHRIFT

(45) Veröffentlichungstag der Patentschrift: **24.06.92**

(51) Int. Cl.⁵: **C08G 77/38**, C08G 77/18

(21) Anmeldenummer: **84103677.5**

(22) Anmeldetag: **04.04.84**

Die Akte enthält technische Angaben, die nach dem Eingang der Anmeldung eingereicht wurden und die nicht in dieser Patentschrift enthalten sind.

(54) **Verfahren zur Herstellung von Polydiorganosiloxanen mit Hydroxyaryloxy-Endgruppen.**

(30) Priorität: **19.04.83 DE 3314191**
**26.09.83 DE 3334782**

(43) Veröffentlichungstag der Anmeldung:
**24.10.84 Patentblatt 84/43**

(45) Bekanntmachung des Hinweises auf die Patenterteilung:
**24.06.92 Patentblatt 92/26**

(84) Benannte Vertragsstaaten:
**DE FR GB IT NL**

(56) Entgegenhaltungen:
**DE-A- 2 512 581**
**US-A- 3 328 350**

(73) Patentinhaber: **BAYER AG**

**W-5090 Leverkusen 1 Bayerwerk(DE)**

(72) Erfinder: **Paul, Winfried, Dr.**
**Bethelstrasse 22**
**W-4150 Krefeld 1(DE)**
Erfinder: **Nouvertné, Werner, Dr.**
**Scheiblerstrasse 95**
**W-4150 Krefeld 1(DE)**
Erfinder: **Neuray, Dieter, Dr.**
**1822 Tragone Drive**
**Pittsburgh, PA 15241(US)**
Erfinder: **Steinberger, Helmut, Dr.**
**Winand-Rossi-Strasse 36**
**W-5090 Leverkusen 1(DE)**
Erfinder: **Grape, Wolfgang, Dr.**
**Roggendorfstrasse 61**
**W-5000 Köln 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die vorliegende Erfindung betrifft ein verbessertes Verfahren zur Herstellung von α,ω-Bis-hydroxyaryloxyendgruppenhaltigen Polydiorganosiloxanen.

Polydiorganosiloxane mit Hydroxy-aryloxy-Endgruppen sind z.B. aus den US-Patentschriften 3 419 634, 3 821 325 und 3 832 419 bekannt, die ihre Herstellung aus α,ω-Bishalogenpolydiorganosiloxanen und ihre Verwendung als Zwischenprodukt zur Herstellung von Organopolysiloxan-Polycarbonat-Blockcopolymeren beschreiben.

Die US-Patentschrift 3 539 657 (DOS 19 13 908) beschreibt die Reaktion von Siloxanketten mit Acyloxy-Endgruppen und Polyarylenpolyetherketten mit phenolischen Hydroxyl-Endgruppen zur Herstellung von Siloxan-Polyarylenpolyether-Blockmischpolymerisaten. Obwohl die Herstellung α,ω-Bishydroxyaryloxyendgruppenhaltiger Polydiorganosiloxane auf Basis von

Bishalogenpolysiloxanen durchführbar ist und das Verfahren bei sorgfältiger Reaktionsführung und Aufarbeitung ein sauberes, zur weiteren Verwendung geeignetes Produkt liefert, ist das Verfahren noch nicht zufriedenstellend, da es einen hohen Überschuß im Reaktionsmedium löslicher Basen erfordert, deren Entfernung vor der Weiterverarbeitung durch arbeitsaufwendige Neutralisation und Auswaschen zu hohen Ausbeuteverlusten durch Ausfällung und Emulsionsbildung führt.

Das nach DE-A 2512581 und US-A 3328350 in Abwesenheit von Katalysatoren erhältliche Produkt erweist sich als zur weiteren Umsetzung weniger geeignet. Der Einsatz der vorgenannten Katalysatoren führt zu störenden Beimengungen, die entweder eine aufwenige Reinigung erforderlich machen oder aber eine weitere Umsetzung der gewünschten α,ω-Bishydroxyaryloxy-polydiorganosiloxane in Polykondensations- oder Polyadditionsreaktionen ausschließen.

So ist z.B. der bei den genannten alkalischen Katalysatoren laut GB 880 022 unvermeidliche hohe Anteil an cyclischem Tetramer des Dimethylsiloxans nicht erwünscht. Titansäureester reagieren mit Polyphenolen zu charakteristisch gefärbten Produkten, die sich nicht abtrennen lassen.

Die Aufgabe der Erfindung war es daher, ein wirtschaftliches Verfahren bereitzustellen, das die gewünschten α,ω-Bis-hydroxy-aryloxypolydiorganosiloxane in hoher Ausbeute und frei von allen die Weiterverarbeitung störenden Beimengungen liefert.

Es wurde nun ein Verfahren zur Herstellung von Polydiorganosiloxanen mit α,ω-Hydroxy-aryloxy-Endgruppen gefunden, das dadurch gekennzeichnet ist, daß man α,ω-Bis-acyloxyendgruppen-haltige Polydiorganosiloxane mit Diphenolen im Molverhältnis von 1:2 bis 1:20, unter Verwendung von Alkalicarbonaten oder von Erdalkalicarbonaten und vorzugsweise von Natriumcarbonat oder Kaliumcarbonat, in mindestens stöchiometrischen Mengen, bezogen auf Mole eingesetzter α,ω-Bis-acyloxyendgruppen-haltiger Polydiorganosiloxane, umsetzt. Es können sowohl einheitliche α,ω-Bis-acyloxyendgruppenhaltige Polydiorganosiloxane als auch Gemische verschiedener dieser Polydiorganosiloxane eingesetzt werden.

Bevorzugt einzusetzende α,ω-Bis-acyloxyendgruppenhaltige Polydiorganosiloxane sind solche der Formel (I)

$$R-\overset{O}{\overset{\|}{C}}-O-(-\underset{R'}{\overset{R'}{Si}}-O-)_a(-\underset{R''}{\overset{R'}{Si}}-O-)_b(-\underset{R''}{\overset{R''}{Si}}-O-)_c-\overset{O}{\overset{\|}{C}}-R \qquad (I),$$

worin die Anzahl der Diorganosiloxy-Einheiten n = a + b + c = 5 bis 100, vorzugsweise 20 bis 80, ist und

R,R' und R'' gleich oder verschieden sind und Wasserstoff, lineares Alkyl, verzweigtes Alkyl, Alkenyl, halogeniertes lineares Alkyl, halogeniertes verzweigtes Alkyl, Aryl oder halogeniertes Aryl, vorzugsweise aber Methyl bedeuten.

Alkyl ist in vorstehender Formel (I) beispielsweise $C_1$-$C_{20}$-Alkyl, Alkenyl ist in vorstehender Formel (I) beispielsweise $C_2$-$C_6$-Alkenyl; Aryl ist in vorstehender Formel (I) $C_6$-$C_{14}$-Aryl. Halogeniert bedeutet in vorstehender Formel teilweise oder vollständig chloriert, bromiert oder fluoriert. Beispiele für Alkyle, Alkenyle, Aryle, halogenierte Alkyle und halogenierte Aryle sind Methyl, Ethyl, Propyl, n-Butyl, tert.-Butyl, Vinyl, Phenyl, Naphthyl, Chlormethyl, Perfluorbutyl und Perfluoroctyl.

Die als Ausgangsverbindungen einzusetzenden α,ω-Bis-acyloxy-endgruppenhaltigen Polydiorganosiloxane sind entweder bekannt (siehe Europäische Patentschriften Nr. 000 3285 oder 001 2892) oder nach literaturbekannten Verfahren herstellbar.

Für das erfindungsgemäße Verfahren einzusetzende Diphenole sind:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-sulfoxide,
Bis-(hydroxyphenyl)-sulfone und
$\alpha,\alpha$-Bis-(hydroxyphenyl)-diisopropylbenzole,
sowie deren kernalkylierte und kernhalogenierte Verbindungen. Diese und weitere geeignete aromatische Dihydroxyverbindungen sind z.B. in den US-Patentschriften 3 271 367 und 2 999 846 und in den deutschen Offenlegungsschriften 2 063 050 und 2 211 957 aufgeführt.

Erfindungsgemäß einsetzbare Diphenole sind insbesondere solche der Formel (II)

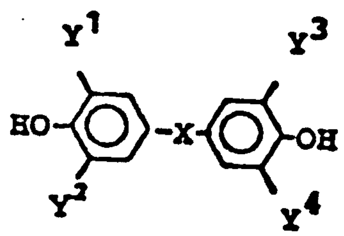

(II)

worin

X eine Einfachbindung, $-CH_2-$,

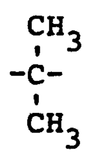 ,

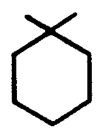 ,

O,S,$SO_2$
oder

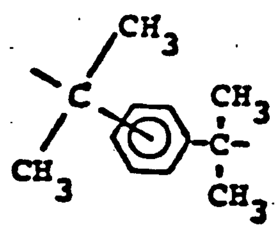

bedeuten und

$Y^1$ bis $Y^4$ gleich oder verschieden sind und Wasserstoff, $C_1$-$C_4$-Alkyl, vorzugsweise Methyl, oder Halogen, vorzugsweise Chlor oder Brom

bedeuten.

Bevorzugte Diphenole sind beispielsweise
2,2-Bis-(4-hydroxyphenyl)-propan,
1,1-Bis-(4-hydroxyphenyl)-cyclohexan,
2,2-Bis-(3,5-dichlor-4-hydroxyphenyl)-propan,
2,2-Bis-(3,5-dibrom-4-hydroxyphenyl)-propan,
2,2-Bis-(3,5-dimethyl-4-hydroxyphenyl)-propan,
Bis-(3,5-dimethyl-4-hydroxyphenyl)-methan und

Bis-(4-hydroxyphenyl)-sulfid.

Es können sowohl die geeigneten Diphenole allein als auch deren Mischungen eingesetzt werden.

Bei der Durchführung des erfindungsgemäßen Verfahrens wird eine wasserfreie Mischung der Acyloxyendgruppen aufweisenden Polydiorganosiloxane, bevorzugt der Formel (I), und der Diphenole, bevorzugt der Formel (II), bei Temperaturen gebildet, die für die Bewirkung der Umsetzung ausreichend sind.

Für die Durchführung des erfindungsgemäßen Verfahrens ist es zweckmäßig, der Reaktionsmischung ein geeignetes inertes organisches Lösungsmittel zuzusetzen, um die Bildung des Reaktionsproduktes zu erleichtern. Geeignete organische Lösungsmittel sind beispielsweise Methylenchlorid, Chloroform, Ethylenchlorid, Chlorbenzol usw., obwohl im allgemeinen jedes organische Lösungsmittel eingesetzt werden kann, welches gegenüber den Reaktanten inert ist und dessen Siedepunkt hoch genug liegt, um einen wirtschaftlichen Reaktionsablauf zu gewährleisten. Die Konzentration der gelösten Reaktanten beträgt dabei beispielsweise 15 Gew.-%.

Es hat sich als vorteilhaft herausgestellt, das in einem inerten organischen Lösungsmittel gelöste Bisacyloxypolydiorganosiloxan zu einer Lösung des Diphenols in einem inerten organischen Lösungsmittel, die zusätzlich anorganische Base enthält, hinzuzugeben, obwohl auch jede andere Reihenfolge der Zugabe ohne Komplikationen erfolgen kann.

Als anorganische Basen eignen sich vorzugsweise solche, die im Reaktionsmedium unter den Reaktionsbedingungen unlöslich sind und keine die Weiterverarbeitung der $\alpha,\omega$-Bis-hydroxyaryloxy-polydiorganosiloxane störenden löslichen Produkte bilden. Hinsichtlich der Unlöslichkeit müssen die anorganischen Basen die gleichen Anforderungen erfüllen wie üblicherweise für organische Lösemittel verwendete Trokkenmittel. Es ist zweckmäßig, solche anorganischen Basen auszuwählen, die wasserfrei erhältlich sind und unter den Reaktionsbedingungen keine unerwünschten Nebenreaktionen mit den Diphenolen eingehen.

Als anorganische Basen eignen sich insbesondere Alkali- bzw. Erdalkalicarbonate, vorzugsweise Natriumcarbonat oder Kaliumcarbonat. Sie werden in mindestens stöchiometrischen Mengen, bezogen auf Mole eingesetzter $\alpha,\omega$-Bis-acyloxyendgruppen-haltiger Polydiorganosiloxane, eingesetzt.

Die Reaktionstemperaturen liegen zwischen 0 °C und 150 °C, vorzugsweise zwischen 70 °C und 130 °C.

Die erfindungsgemäß erhältlichen $\alpha,\omega$-Bis-hydroxy-aryloxyendgruppenhaltigen Polydiorganosiloxane können als solche bzw. im Gemisch mit überschüssigem Diphenol isoliert und aufbewahrt oder vorteilhafterweise in Form der bei ihrer Herstellung anfallenden Lösung weiter eingesetzt werden.

Das erfindungsgemäße Verfahren ermöglicht es, $\alpha,\omega$-Bis-hydroxyaryloxyendgruppenhaltige Polydiorganosiloxane in sehr guten Ausbeuten auf einfachem Weg frei von störenden Beimengungen herzustellen, so daß die erfindungsgemäß erhältlichen Produkte in Polykondensationen und Polyadditionen grundsätzlich überall eingesetzt werden können, wo die entsprechenden Diphenole Verwendung finden. So können sie für sich oder unter Mitverwendung anderer Diphenole beispielsweise nach den üblichen Verfahren zu (aromatischen) Copolyestern, Copolycarbonaten, Copolyethern, Copolysulfonen, modifizierten Epoxidharzen und Polyurethanen umgesetzt werden.

Derartige Produkte wie z.B. die Siloxanpolycarbonate können gemäß US-PS 3 189 662 in bekannter Weise zur Beschichtung, zur Isolation, als Bindestoffe für Teile und Schichtkörper und in Klebemitteln verwendet werden. Bestimmte Siloxancopolycarbonate können auch thermoplastisch zu Formkörpern verarbeitet werden. Sie können überall dort eingesetzt werden, wo bislang die bekannten aromatischen Polycarbonate Verwendung finden und wo zusätzlich verbesserte mechanische Eigenschaften bei tiefen Temperaturen und/oder verbessertes Brandverhalten erwünscht sind, z.B. auf dem Kfz-Sektor und Elektrosektor.

Nachstehend wird die Erfindung durch Beispiele näher erläutert und mit dem Stand der Technik verglichen.

Die technische Brauchbarkeit der Siloxancopolycarbonate, wie sie aus den nach erfindungsgemäßem Verfahren erhältlichen $\alpha,\omega$-Bishydroxyaryloxypolydiorganosiloxanen hergestellt werden können, wird an einem Verwendungsbeispiel aufgezeigt.

Die Charakterisierung der Produkte hinsichtlich Umsetzungsgrad und Reinheit erfolgt im wesentlichen durch Kernresonanzspektren, die auch eine Bestimmung des Siloxangehalts erlauben. Als mittlere Siloxanblocklänge wird der durch Bestimmung der Acyloxy-Endgruppen bzw. Halogenatome im Ausgangsmaterial ermittelte Polymerisationsgrad $\overline{P}_n$ angegeben.

Der Umsetzungsgrad kann durch vollständige Verseifung und ionenchromatographische Bestimmung von Carboxylat bzw. Halogenid überprüft werden.

Die Bestimmung der Kerbschlagzähigkeit erfolgt in Anlehnung an DIN 53 453/ISO R 179 an Flachstäben (80 mm x 10 mm x 4 mm) mit einer V-förmigen Kerbe der Kerbtiefe 2,7 mm.

Die Bestimmung der Wärmeformbeständigkeit nach Methode Vicat (B) erfolgt gemäß DIN 53 460/ISO 306.

Beschreibung des Verbrennungstests:

Nach dem UL 94-Test (Underwriters' Laboratories, Inc.) werden Polycarbonatproben zu Stäben der Abmessungen 127 x 12,7 x 1,6 (oder 3,2) mm (5,00 x 0,5 x 1/16 (oder 1/8) inches) geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 10 mm (3/8 inch) hohen blauen Flamme von Erdgas mit einem Wärmeinhalt von 3,73 x $10^4$ kJ/$m^3$ (1,000 BTU per cubic foot) benutzt.

Die UL 94 V O-Klassifizierung umfaßt die nachstehend beschriebenen Eigenschaften von Materialien, die gemäß der UL 94 Vorschrift geprüft wurden. Die Polycarbonate in dieser Klasse enthalten keine Proben, die länger als 10 s nach jeder Einwirkung der Testflamme brennen; sie zeigen keine Gesamt-Flammzeit von mehr als 50 s bei der zweimaligen Flammeinwirkung auf jeden Probensatz; sie enthalten keine Proben, die vollständig bis hinaus zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL 94-Klassifizierungen bezeichnen Proben, die weniger flammwidrig und selbstverlöschend sind und die flammende Tropfen oder Teilchen abgeben. Diese Klassifizierungen werden mit UL 94 V-1 und V-2 bezeichnet.

## BEISPIELE

### Beispiel 1 (Vergleichsbeispiel)

In ein Gefäß, das mit Gaseinlaßrohr, Kühler, Tropftrichter, Trockenrohr und Rührer versehen ist, gibt man 1140 Gew.-Teile Bisphenol A und 22400 Gew.-Teile Dichlormethan. Unter gleichmäßigem Rühren fügt man durch das Gaseinlaßrohr, das sich bis unter die Flüssigkeitsoberfläche erstreckt, 100 Gew.-Teile gasförmigen Ammoniaks hinzu, bis das Bisphenol A gelöst ist. Dies erfordert etwa 15 Minuten Danach gibt man zu der Lösung über eine Zeit von etwa 15 Minuten eine Lösung von 3023 Gew.-Teilen $\alpha,\omega$-Bischlorpolydimethylsiloxan, $\overline{P}_n$ = 40, in 5600 Gew.-Teilen Dichlormethan, wobei das Rühren für eine weitere Stunde fortgesetzt wird. Dann werden etwa 6000 Gew.-Teile Wasser zugesetzt und die Mischung mit konzentrierter Phosphorsäure bis zu einem pH von etwa 6 angesäuert. Die organische Schicht wird abgetrennt und weiter gereinigt, indem sie mit Wasser bis zur Entfernung der Ammoniumionen gewaschen wird. Ausbeute: 57 % der Theorie.

### Beispiel 2

In ein Gefäß, das mit Kühler, Trockenrohr, Tropftrichter und Rührer versehen ist, gibt man 1140 Gew.-Teile Bisphenol A und 22400 Gew.-Teile Chlorbenzol. Es wird auf 100 °C erwärmt und mit 276 Gew.-Teilen Kaliumcarbonat versetzt. Danach gibt man zu der Mischung unter Rückfluß über eine Zeit von 15 Minuten eine Lösung von 3068 Gew.-Teilen $\alpha,\omega$-Bisacetoxypolydimethylsiloxan, $\overline{P}_n$ = 40, in 5600 Gew.-Teilen Chlorbenzol, wobei das Rühren für zwei weitere Stunden fortgesetzt wird. Es wird auf etwa 80 °C abgekühlt und noch heiß filtriert.
Ausbeute: 98 % der Theorie

### Beispiel 2a(Vergleichsbeispiel)

In ein Gefäß, das mit Kühler, Trockenrohr, Tropftrichter, Rührer und Destillationsbrücke mit Vorlage versehen ist, gibt man 1140 Gew.-Teile Bispenol A und 22400 Gew.-Teile Chlorbenzol. Unter Rückfluß und Rühren wird innerhalb 15 Minuten eine Lösung von 3068 Gew.-Teilen $\alpha,\omega$-Bisacetoxypolydimethylsiloxan, $\overline{P}_n$ = 40,in 5600 Gew.-Teilen Chlorbenzol zugegeben. Anschließend wird etwa ein Drittel der Lösemittelmenge abdestilliert, wobei die bei der Reaktion entstandene Essigsäure als azeotropes Gemisch mit dem Chlorbenzol übergeht. Ausbeute: 97 % der Theorie.

### Beispiele 3(Verwendungsbeispiel)

Der zehnte Teil der Lösung aus Beispiel 2 wird in einem Reaktionskolben, der mit Rührer, Phosgeneinlaßrohr, Rückflußkühler, Innenthermometer und Tropftrichter ausgerüstet ist, mit 2280 Gew.-Teilen Bisphenol A, 1010 Gew.-Teilen Natriumhydroxid, 31100 Gew.-Teilen Wasser, 13500 Gew.-Teilen Dichlormethan und

10700 Gew.-Teilen Chlorbenzol und 25 Gew.-Teilen Phenol versetzt. Bei Raumtemperatur werden 1646 Gew.-Teile Phosgen eingeleitet, wobei der pH durch Zugabe 45 %iger Natronlauge zwischen 12 und 13 gehalten wird. Das Einleiten nimmt ca. eine Stunde in Anspruch. Danach werden 8 Gew.-Teile Triethylamin zugesetzt und weitere 45 Minuten bei pH 12 bis 13 nachgerührt. Das Cokondensat wird nach für Polycarbonat gängigen Methoden aufgearbeitet.

Die relative Lösungsviskosität beträgt 1,29 (gemessen bei einer Konzentration von 5 g/l in Dichlormethan bei 25 ° C).

Der Gehalt an Polydimethylsiloxan beträgt 9,4 Gew.-%, bezogen auf das Gesamtgewicht des Copolycarbonats.

Anwendungstechnische Prüfergebnisse:

| | |
|---|---|
| Kerbschlagzähigkeit bei 20°C | 36 $kJ/m^2$ |
| bei -40°C | 19 $kJ/m^2$ |
| Wärmeformbeständigkeit nach Vicat (B) | 137°C |
| Brandtest nach UL 94 | V-O in 3,2 mm |

**Patentansprüche**

1. Verfahren zur Herstellung von Polydiorganosiloxanen mit α,ω-Hydroxy-aryloxy-Endgruppen, **dadurch gekennzeichnet**, daß man α,ω-Bisacyloxyendgruppenhaltige Polydiorganosiloxane mit Diphenolen im Molverhältnis von 1:2 bis 1:20, unter Verwendung von Alkalicarbonaten oder von Erdalkalicarbonaten in mindestens stöchiometrischen Mengen, bezogen auf Mole eingesetzter α,ω-bisacyloxyendgruppenhaltiger Polydiorganosiloxane, umsetzt.

2. Verfahren gemäß Anspruch 1, dadurch gekennzeichnet, daß man α,ω-bisacyloxyendgruppenhaltiger Polydiorganosiloxane der Formel (I) einsetzt,

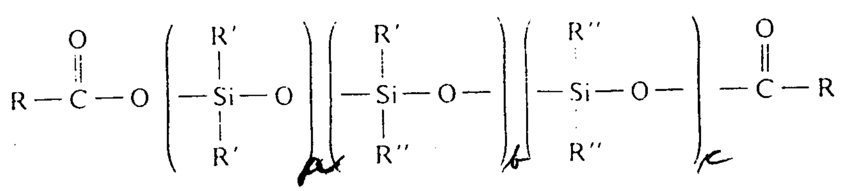

(I)

worin die Anzahl der Diorganosiloxy-Einheiten n = a + b + c = 5 bis 100 ist, und worin R, R' und R" gleich oder verschieden sind und Wasserstoff, lineares Alkyl, verzweigtes Alkyl, Alkenyl, halogeniertes lineares Alkyl, halogeniertes verzweigtes Alkyl, Aryl oder halogeniertes Aryl bedeuten.

**Claims**

1. A process for the production of α,ω-hydroxyaryloxy-terminated polydiorganosiloxanes, characterized in that α,ω-bisacyloxy-terminated polydiorganosiloxanes are reacted with diphenols in a molar ratio of 1:2 to 1:20 using alkali metal carbonates or alkaline earth metal carbonates in at least stoichiometric guantities, based on mols α,ω-bisacyloxy-terminated polydiorganosiloxanes used.

2. A process as claimed in claim 1, characterized in that α,ω-bisacyloxy-terminated polydiorganosiloxanes corresponding to formula I

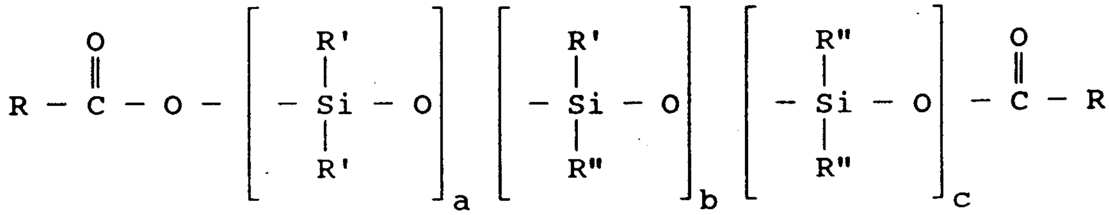

in which the number of diorganosiloxy units n = a + b + c = 5 to 100 and in which R, R' and R'' may be the same or different and represent hydrogen, linear alkyl, branched alkyl, alkenyl, halogenated linear alkyl, halogenated branched alkyl, aryl or halogenated aryl, are used.

## Revendications

1. Procédé de préparation de polydiorganosiloxanes à groupes terminaux $\alpha,\omega$-hydroxyaryloxy caractérisé en ce que l'on fait réagir des polydiorganosiloxanes à groupes terminaux $\alpha,\omega$-bis-acyloxy avec des diphénols à un rapport molaire de 1:2 à 1:20, avec utilisation de carbonates alcalins ou de carbonates alcalinoterreux en quantité au moins stoechiométrique par rapport à la quantité, en moles, de polydiorganosiloxanes à groupes terminaux $\alpha,\omega$-bis-acyloxy mis en oeuvre.

2. Procédé selon la revendication 1, caractérisé en ce que l'on met en oeuvre des polydiorganosiloxanes à groupes terminaux $\alpha,\omega$-bis-acyloxy répondant à la formule I

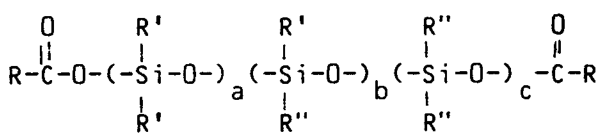 (I),

dans laquelle le nombre des motifs diorganosiloxy n = a + b + c = 5 à 100 et R, R' et R'' ayant des significations identiques ou différentes, représentent l'hydrogène, un groupe alkyle linéaire, un groupe alkyle ramifié, un groupe alcényle, un groupe alkyle linéaire halogéné, un groupe alkyle ramifié halogéné, un groupe aryle ou aryle halogéné.